# EUROPÄISCHE PATENTSCHRIFT

(11) **EP 2 010 439 B1**
(45) Veröffentlichungstag und Bekanntmachung des Hinweises auf die Patenterteilung: **01.07.2015**
(21) Anmeldenummer: 07724344.2
(22) Anmeldetag: 18.04.2007
(51) Int. Cl.: B65D 81/26, B01J 20/02, B01J 20/04, B01J 20/10, B01J 20/26, B01J 20/28, B01D 53/26, B01D 53/28, B01J 20/12, B01J 20/24

(54) **FEUCHTEREGULIERENDES VERPACKUNGSMATERIAL, VERFAHREN ZU DESSEN HERSTELLUNG UND DESSEN VERWENDUNG**
HUMIDITY-REGULATING PACKAGING MATERIAL, METHOD FOR THE PRODUCTION THEREOF, AND USE THEREOF
MATÉRIAU D'EMBALLAGE RÉGULATEUR D'HUMIDITÉ, SON PROCÉDÉ DE FABRICATION ET SON UTILISATION

(30) Priorität: 24.04.2006 DE 102006018872
(43) Veröffentlichungstag der Anmeldung: 07.01.2009
(73) Patentinhaber: Fraunhofer-Gesellschaft zur Förderung der angewandten Forschung e.V., 80686 München (DE)
(72) Erfinder: LANGOWSKI, Horst-Christian, 85406 Zolling (DE); SÄNGERLAUB, Sven, 04509 Krostitz, OT Priester (DE); WANNER, Thomas, Tunis 1003 (TN)
(74) Vertreter: Pfenning, Meinig & Partner GbR
(86) Internationale Anmeldenummer: PCT/EP2007/003407
(87) Internationale Veröffentlichungsnummer: WO 2007/121909

(56) Entgegenhaltungen:
- EP-B- 0 847 303
- DE-A1- 4 000 143
- DE-U- 7 109 962
- US-A- 6 059 860
- US-A- 6 080 350
- DATABASE WPI Week 198044 Derwent Publications Ltd., London, GB; AN 1980-77760C XP002460242 -& JP 55 119418 A (FUJISHIMA D) 13. September 1980 (1980-09-13)

## Beschreibung

Die Erfindung betrifft ein Verfahren zur Herstellung eines feuchteregulierenden Verpackungsmaterials aus einer mit Kavitäten versehen Polymermatrix, in der eine die in der Umgebung vorhandene Feuchtigkeit regulierende Substanz eingebettet ist. Verwendung finden die Verpackungsmaterialien insbesondere in der Lebensmittel-, der pharmazeutischen, und der chemischen Industrie. Ebenso sind aber auch Verwendungen für die Verpackung von elektronischen Bauteilen denkbar.

Zur Einflussnahme auf die Luftfeuchtigkeit in der Umgebung von gegenüber Luftfeuchtigkeit empfindlichen Produkten sind grundsätzlich zwei verschiedene Varianten bekannt.

Die erste Variante betrifft Feuchteabsorber, d.h. Stoffe und Stoffsysteme, die Wasserdampf absorbieren können. Mit Hilfe derartiger Stoffe lässt sich die Umgebungsfeuchte auf bis zu 0 % relative Feuchte reduzieren. Typische Feuchteabsorber sind Oxide, z.B. Calciumoxid, oder spezielle Silikate, wie z.B. ein Molekularsieb. Die Absorption der Luftfeuchtigkeit, z.B. von Wasserdampf, ist unter Umgebungsbedingung irreversibel. Nur bei starker Erhitzung kann die absorbierte Feuchtigkeit vollständig freigesetzt werden.

Die zweite Variante betrifft sog. Feuchteregulatoren, d.h. Stoffe und Stoffsysteme, welche durch Aufnahme oder Abgabe von Feuchtigkeit eine bestimmte relative Feuchte in einem abgeschlossenen System einstellen und konstant halten können. Auf diese Weise kann die relative Feuchte in einem Bereich zwischen 1 und 100 % eingestellt werden.

Feuchteregulatoren absorbieren Wasserdampf ab einer bestimmten stoffspezifischen relativen Luftfeuchte. Spezielle Silikate, wie Silikagel und Bentonit, Cellulose und spezielle Alkohole absorbieren Wasserdampf ab etwa 1 % relative Luftfeuchte.

Hygroskopische Salze und hygroskopische Zucker absorbieren Wasserdampf, je nach Substanz, bei geringen, mittleren und hohen relativen Luftfeuchten. So absorbiert Lithiumbromid ab einer relativen Luftfeuchte von 6 %, Magnesiumnitrat ab 53 % relative Luftfeuchte und Kaliumsulfat ab 97 % relative Luftfeuchte. Die hygroskopischen Salze und Zucker lösen sich durch die Absorption von Wasserdampf in dem absorbierten Wasser auf. Konzentrierte Lösungen mit Bodensatz, d.h. nicht gelöste Kristalle, von hygroskopischen Salzen und Zuckern puffern ihre Umgebungsfeuchte auf die relative Feuchte, bei der sie beginnen Wasserdampf zu absorbieren. Steigt die Umgebungsfeuchte, absorbieren die Lösungen mit Bodensatz Wasserdampf und ihre Kristalle lösen sich auf. Sinkt die Umgebungsfeuchte, geben die Lösungen Wasserdampf ab und es fallen ihre Kristalle aus.

Das besondere bei hygroskopischen Salzen und Zuckern ist deren hohe Absorptionskapazität. Sie absorbieren bei hohen relativen Luftfeuchten ein Vielfaches ihres Eigengewichtes an Wasserdampf. Dabei bilden sich Salz- bzw. Zuckerlösungen. Das Volumen dieser Lösungen ist größer als das Volumen der ungelösten Salz- oder Zuckerkristalle. Je mehr Wasserdampf absorbiert wird, desto stärker erhöht sich das Volumen der Salz- bzw. Zuckerlösungen.

Silikate und Cellulose haben eine deutlich geringere Absorptionskapazität als hygroskopische Salze und Zucker. Silikate und Cellulose geben absorbierten Wasserdampf unvollständig bei sinkender Umgebungsfeuchte ab. Hierbei spricht man auch von einer Hysterese.

Aus dem Stand der Technik sind Beutel oder Sachets bekannt, die mit Feuchteabsorbern bzw. Feuchteregulatoren gefüllt sind. Diese werden zur Reduzierung der Umgebungsfeuchte eingesetzt.

Aus der US 6,217,701 B1 ist eine Zusammensetzung aus Stärke und Calciumchlorid als Feuchteregulator bekannt. Die Stärke bindet hier die Calciumchloridlösung, die sich durch Absorption des Wasserdampfes durch das Calciumchlorid bildet.

Es sind ebenso Feuchteabsorber und Regulatoren bekannt, die in Polymer- oder Oligomer-Matrizes eingearbeitet sind. Bei diesen Systemen handelt es sich um Compounds bzw. Dispersionen aus Polymeren, Lacken oder Heißschmelzklebstoffen mit pulvrigen Feuchteabsorbern bzw. Feuchteregulatoren, die zu Formkörpern extrudiert oder als Beschichtung aufgetragen werden können (DE 695 12 331 T2 und DE 198 26 209 A1).

Die vorbeschriebenen Systeme werden jedoch lediglich zur Absorption von Wasserdampf eingesetzt und sind zur Regulierung der Umgebungsfeuchte weder vorgesehen noch darauf optimiert.

Aus der DE 40 00 143 A1 ist eine feuchtigkeitsregulierende Verpackung bekannt, die auf einem Vlies basiert, das die Umgebungsfeuchte regulieren kann. Das Vlies ist dabei mit einer hygroskopischen Lösung imprägniert. Weiterhin sind aus der DE 691 22 287 T2 Wasserdampf-durchlässige Beutel bekannt, die mit Feuchteregulatoren gefüllt sind.

Diese beiden Systeme zur Feuchteregulierung bringen aber den Nachteil mit sich, dass Beutel und Vliese mit Feuchteregulatoren keinen Schutz vor dem Austritt des flüssigen Feuchteregulators, insbesondere bei Beschädigung, gewähren. Beutel und Vliese sind nicht als Packmittel, sondern nur als Packhilfsmittel geeignet und werden den Verpackungen beigefügt.

Auf der anderen Seite haben Polymer-Matrizes mit darin enthaltenen festen Feuchteregulatoren oft eine geringe Absorptions und Desorptionskapazität für Wasserdampf.

Die EP 0 847 303 B1 offenbart einen sorptiven feuchteregulierenden Gegenstand zur Verwendung in einer Verpackung mit einer Kavitäten aufweisenden Polymermatrix, in der mindestens ein für die Aufnahme und/oder Abgabe von Feuchtigkeit geeigneter Feuchteregulator dispergiert ist. Durch Strecken des Gegenstands kann eine höhere Porosität erzielt werden, was zu einer schnelleren Adsorption führt.

Aufgabe der vorliegenden Erfindung war daher die Bereitstellung eines Verfahrens zur Herstellung feuchteregulierender Verpackungsmaterialien, die zu Verpackungen verarbeitet werden können. Diese Verpackungsmaterialien sollen die relative Feuchte im Kopfraum einer Verpackung durch Ab- und Desorption von Feuchtigkeit einstellen können. Gleichzeitig können Sie Abhilfe schaffen, dass bei einer Beschädigung des Verpackungsmaterials der Feuchteregulator nicht austreten kann.

Diese Aufgabe wird durch das Verfahren mit den Merkmalen des Anspruchs 1 gelöst. Die weiteren abhängigen Ansprüche zeigen vorteilhafte Weiterbildungen auf.

Mit dem erfindungsgemäßen Verfahren wird ein feuchteregulierendes Verpackungsmaterial bereitgestellt, das aus einer PolymerMatrix besteht, die eine Vielzahl von Kavitäten aufweist. Das Verpackungsmaterial ist eine extrudierte Folie, ein extrudiertes Spritzgussteil oder ein gegossenes Verpackungsmaterial. In der Polymer-Matrix ist dabei mindestens ein für die Aufnahme und/oder Abgabe von Feuchtigkeit geeigneter Feuchteregulator dispergiert.

Die Verpackungsmaterialien bringen dabei folgende Vorteile mit sich:
- Mit Hilfe der Verpackungsmaterialien kann die relative Feuchte in einem geschlossenen Raum in einem Bereich der relativen Feuchte von 1 bis 100 % eingestellt werden.
- Die relative Feuchte kann mit Hilfe der Verpackungsmaterialien den Bedürfnissen des zu verpackenden Füllgutes angepasst werden.
- Es kann eine Köndenswasserbildung bei zu hoher relativer Feuchte, speziell bei Temperaturabsenkung, kompensiert werden.
- Das Mikrobenwachstum durch hohe Umgebungsfeuchten kann stark vermindert werden.
- Der Wasserverlust und damit das Austrocknen des zu verpackenden Füllgutes kann vermieden werden.
- Somit kann eine optimale Produktqualität des Füllgutes und eine Mindesthaltbarkeit sichergestellt werden.

Der Feuchteregulator wird dabei durch das Verpackungsmaterial gebunden, sodass ein Austreten des Feuchteregulators auch bei einer Sättigung mit Wasserdampf verhindert wird.

Entscheidende Bedeutung kommt dabei den Kavitäten, d.h. Hohlräumen, in den Verpackungsmaterialien zu. So können Lösungen, die sich aus den Feuchteregulatoren in der Polymer-Matrix während der Absorption von Feuchtigkeit bilden, in den Kavitäten aufgenommen werden. Dadurch werden die Lösungen in der Matrix gespeichert, ohne dass diese aus der Matrix austreten können. Im Vergleich zu den aus dem Stand der Technik bekannten Verpackungsmaterialien wird die Kapazität für die Absorption von Feuchtigkeit, insbesondere von Wasserdampf, stark erhöht. Die absorbierte Feuchtigkeit, insbesondere Wasserdampf, kann von den sich bild endenden Lösungen in den Kavitäten gespeichert werden.

Durch die Kavitäten wird die Durchlässigkeit für Feuchtigkeit der Polymer-Matrix erhöht, wodurch die Absorptions- und Desorptionsgeschwindigkeit erhöht werden kann.

Die Polymer-Matrix besteht vorzugsweise aus einem Polymer, einem Copolymer und/oder deren Blends oder Legierungen. Dabei ist es möglich, sowohl polare als auch unpolare Polymere zu verwenden. Das polare Polymer ist bevorzugt ausgewählt aus der Gruppe der Polyamide, Polyvinylester, Polyester, Polyurethane, Säurecopolymere, Polycarbonate, Polystyrole, Ionomere und Mischungen hiervon. Bei Verwendung unpolarer Polymere sind diese vorzugsweise ausgewählt aus der Gruppe der Polyolefine. Besonders bevorzugt werden als unpolare Polymere Polyethylen und/oder Polypropylen verwendet.

Hinsichtlich der Feuchteregulatoren gibt es grundsätzlich keinerlei Beschränkungen, sofern diese Substanzen geeignet sind, Feuchtigkeit aufzunehmen und/oder abzugeben. Vorzugsweise sind die Feuchteregulatoren ausgewählt aus der Gruppe der Salze der Alkali- und Erdalkalimetalle, der hygroskopischen Zucker, der Alkohole, der Silikate und beliebigen Mischungen hiervon. Als Salz der Alkali- bzw. Erdalkalimetalle wird besonders bevorzugt Natriumchlorid, Kaliumchlorid, Zinkchlorid, Natriumcarbonat, Kaliumcarbonat, Kaliumsulfat, Kaliumnitrat und/oder Calciumchlorid verwendet. Als hygroskopischer Zucker ist vorzugsweise Fructose, Glucose und Saccharose enthalten. Unter den Alkoholen sind insbesondere Glycerin und/oder Glycol bevorzugt. Aus der Gruppe der Silikate sind Silikagel und/oder Bentonit besonders bevorzugt.

Vorzugsweise ist in dem Verpackungsmaterial der Feuchteregulator in einer Menge von 0,1 bis 70 Gew.-% enthalten. Besonders bevorzugt liegt er im Bereich von 5 bis 20 Gew.-%.

Eine bevorzugte Ausführungsform des Verpackungsmaterials sieht vor, dass die Kavitäten erfindungsgemäß durch Schäumen der Polymer-Matrix während der Herstellung derselben erzeugt worden sind. Das Schäumen kann mit physikalisch und/oder chemisch wirkenden Treibmitteln durchgeführt werden. Eine weitere bevorzugte Variante, die auch mit der zuvor genannten Variante kombiniert werden kann, sieht vor, dass die Kavitäten oder zusätzlichen Kavitäten durch Recken des Verpackungsmaterials erzeugt werden. Das Verpackungsmaterial kann während oder nach einer Folienextrusion in einem separaten Arbeitsschritt gereckt werden. Zusätzlich kann eine Folie während eines Thermoformprozesses gereckt werden. Beim Recken der Verpackungsmaterialien befinden sich die festen Feuchteregulatoren, die vorzugsweise in Pulverform vorliegen, in der Mitte der Kavitäten. Diese lösen sich dann während des Reckens von der Polymer-Matrix ab. Somit sind sie nicht durch die Polymer-Matrix versiegelt, was zu einer verbesserten Absorptionskinetik führt. Durch das Recken nach dem Schäumen der Polymer-Matrix kann die Wasserdampfdurchlässigkeit erhöht werden, wodurch es zu einer erhöhten Absorptions- und Desorptionsgeschwindigkeit kommt. Die Kavitäten haben dabei vorzugsweise einen mittleren Durchmesser von 0,1 µm bis 50 µm.

Bevorzugt liegt das Verpackungsmaterial in Form einer Folie vor, die dann für die Verpackung beliebiger Produkte eingesetzt werden kann.

Eine weitere bevorzugte Variante sieht vor, dass das Verpackungsmaterial zwischen einer Barrierefolie und einer Siegelfolie eingebettet ist.

Erfindungsgemäß wird ein Verfahren zur Herstellung eines feuchteregulierenden Verpackungsmaterials, wie es zuvor beschrieben wurde, bereitgestellt, bei dem der Feuchteregulator, mit dem das die Polymer-Matrix bildende Polymer vermischt und so in die Polymer-Matrix eingebettet wird. Gleichzeitig oder im Anschluss werden dann in der Polymer-Matrix Kavitäten erzeugt.

Das erfindungsgemäße Verfahren sieht dabei vor, dass die Kavitäten durch Schäumen der Polymer-Matrix erzeugt werden. Alternativ oder in Kombination können die Kavitäten auch durch Schäumen während der Extrusion eines mit Wasser beladenen Feuchteregulators gebildet werden. Ebenso ist es möglich, dass die Kavitäten durch Recken des Verpackungsmaterials, d.h. z.B. nach der Extrusion, erzeugt werden. Die Maßnahmen des Schäumens und des Reckens können auch kombiniert werden, wobei durch das Recken nach dem Schäumen der geschlossenzellige Schaum zusätzlich aufgerissen und in einen offenzelligen Schaum überführt wird.

Die Verpackungsmaterialien finden Verwendung zur Verpackung von festen oder flüssigen Lebensmitteln, Arzneimitteln, chemischen Substanzen, Gefahrgütern, elektronischen Produkten, Kulturgütern, Zierpflanzen. Die Einsatzgebiete erstrecken sich hierbei auf die Lebensmittelindustrie, die pharmazeutische Industrie ebenso wie auf den kulturellen, militärischen und chemischen Bereich. Auch eine Verwendung als partiell optimierte Einzelfolie ist möglich.

## Patentansprüche

1. Verfahren zur Herstellung eines feuchteregulierenden Verpackungsmaterials aus einer Kavitäten aufweisenden Polymermatrix, in der mindestens ein für die Aufnahme und/oder Abgabe von Feuchtigkeit geeigneter Feuchteregulator dispergiert ist, bei dem der Feuchteregulator mit dem die Polymermatrix bildenden Polymer vermischt und so in die Polymermatrix eingebettet wird und in der Polymermatrix durch Schäumen der Polymermatrix Kavitäten erzeugt werden.

2. Verfahren nach Anspruch 1, **dadurch gekennzeichnet, dass** die Kavitäten durch Schäumen während der Extrusion eines mit Wasser beladenen Feuchteregulators gebildet werden.

3. Verfahren nach einem der vorhergehenden Ansprüche, **dadurch gekennzeichnet, dass** die Kavitäten durch anschließendes Recken des Verpackungsmaterials erzeugt werden.

4. Verfahren nach einem der vorhergehenden Ansprüche, **dadurch gekennzeichnet, dass** die Polymermatrix aus einem Polymer, einem Copolymer und/oder deren Blends oder Legierungen besteht.

5. Verfahren nach einem der vorhergehenden Ansprüche, **dadurch gekennzeichnet, dass** die Polymermatrix aus einem polaren Polymer, insbesondere ausgewählt ist aus der Gruppe der Polyamide, Polyvinylester, Polyester, Polyurethane, Säurecopolymere, Polycarbonate, Polystyrole, Ionomere und deren Mischungen, und/oder unpolaren Polymer, insbesondere ausgewählt aus der Gruppe der Polyolefine, bevorzugt Polyethylen und Polypropylen, besteht.

6. Verfahren nach einem der vorhergehenden Ansprüche, **dadurch gekennzeichnet, dass** der Feuchteregulator ausgewählt ist aus der Gruppe der Salze der Alkali- und Erdalkalimetalle, insbesondere ausgewählt aus der Gruppe bestehend aus Natriumchlorid, Kaliumchlorid, Zinkchlorid, Natriumcarbonat, Kaliumcarbonat, Kaliumsulfat, Kaliumnitrat und/oder Calciumchlorid, der hygroskopischen Zucker, insbesondere Fructose, Glucose und Saccharose, der Alkohole, insbesondere ein Glycerin und/oder ein Glykol, der Silikate, insbesondere ein Silikagel und/oder Bentonit, und Mischungen hiervon.

7. Verfahren nach einem der vorhergehenden Ansprüche, **dadurch gekennzeichnet, dass** der Feuchteregulator im Verpackungsmaterial in Pulverform oder flüssig vorliegt.

8. Verfahren nach einem der vorhergehenden Ansprüche, **dadurch gekennzeichnet, dass** das Verpackungsmaterial von 0,1 bis 70 Gew.-%, insbesondere von 5 bis 20 Gew.-% des mindestens einen Feuchteregulators enthält.

9. Verfahren nach einem der vorhergehenden Ansprüche, **dadurch gekennzeichnet, dass** die Kavitäten einen mittleren Durchmesser von 0,1 µm bis 50 µm aufweisen.

10. Verfahren nach einem der vorhergehenden Ansprüche, wobei das Verpackungsmaterial in Form einer Folie vorliegt.

11. Verfahren nach einem der vorhergehenden Ansprüche, **dadurch gekennzeichnet, dass** das Verpackungsmaterial zwischen einer Barrierefolie und einer Siegelfolie eingebettet ist.

12. Verfahren nach einem der vorhergehenden Ansprüche, **dadurch gekennzeichnet, dass** in Kombination zum Schäumen ein Recken durchgeführt wird.

## Claims

1. Method for the production of a moisture-regulating packaging material made from a polymer matrix having cavities, in which at least one moisture regulator that is suitable for the absorption and/or discharge of moisture is dispersed, wherein the moisture regulator is mixed with the polymer forming the polymer matrix and is thus embedded into the polymer matrix, and cavities are produced in the polymer matrix by foaming the polymer matrix.

2. Method according to claim 1, **characterised in that** the cavities are formed by foaming during the extrusion of a moisture regulator that is loaded with water.

3. Method according to one of the preceding claims, **characterised in that** the cavities are produced by subsequent stretching of the packaging material.

4. Method according to one of the preceding claims, **characterised in that** the polymer matrix consists of a polymer, a copolymer and/or blends or alloys thereof.

5. Method according to one of the preceding claims, **characterised in that** the polymer matrix consists of a polar polymer, in particular selected from the group of polyamides, polyvinyl esters, polyesters, polyurethanes, acid copolymers, polycarbonates, polystyrenes, ionomers and mixtures thereof, and/or nonpolar polymers, in particular selected from the group of polyolefins, preferably polyethylenes and polypropylenes.

6. Method according to one of the preceding claims, **characterised in that** the moisture regulator is selected from the group of the salts of alkali metals and alkaline earth metals, in particular selected from the group consisting of sodium chloride, potassium chloride, zinc chloride, sodium carbonate, potassium carbonate, potassium sulphate, potassium nitrate and/or calcium chloride, hygroscopic sugar, in particular fructose, glucose and saccharose, alcohols, in particular a glycerine and/or a glycol, silicates, in particular a silica gel and/or bentonite, and mixtures thereof.

7. Method according to one of the preceding claims, **characterised in that** the moisture regulator in the packaging material is present in powder or liquid form.

8. Method according to one of the preceding claims, **characterised in that** the packaging material contains 0.1 to 70% b.w., in particular 5 to 20% b.w. of the at least one moisture regulator.

9. Method according to one of the preceding claims, **characterised in that** the cavities have an average diameter of 0.1µm to 50µm.

10. Method according to one of the preceding claims, wherein the packaging material is present in the form of a film.

11. Method according to one of the preceding claims, **characterised in that** the packaging material is embedded between a barrier film and a sealing film.

12. Method according to one of the preceding claims, **characterised in that** stretching is carried out in combination with foaming.

## Revendications

1. Procédé de fabrication d'un matériau d'emballage régulateur d'humidité, à partir d'une matrice polymère comportant des cavités, dans laquelle est dispersé un régulateur d'humidité convenant à l'absorption et/ou à la désorption de l'humidité, dans lequel le régulateur d'humidité est mélangé au polymère formant la matrice polymère et est ainsi incorporé dans la matrice polymère, des cavités étant produites dans la matrice polymère par expansion de la matrice polymère.

2. Procédé selon la revendication 1, **caractérisé en ce que** les cavités sont formées par une expansion pendant l'extrusion d'un régulateur d'humidité chargé en eau.

3. Procédé selon l'une des revendications précédentes, **caractérisé en ce que** les cavités sont produites par un étirage, réalisé ensuite, du matériau d'emballage.

4. Procédé selon l'une des revendications précédentes, **caractérisé en ce que** la matrice polymère est constituée d'un polymère, d'un copolymère et/ou de mélanges ou d'alliages de ces derniers.

5. Procédé selon l'une des revendications précédentes, **caractérisé en ce que** la matrice polymère est constituée d'un polymère polaire, choisi en particulier dans le groupe des polyamides, des poly(esters vinyliques), des polyesters, des polyuréthannes, des copolymères d'acides, des polycarbonates, des polystyrènes, des ionomères et de leurs mélanges, et/ou d'un polymère non polaire, choisi en particulier dans le groupe des polyoléfines, de préférence le polyéthylène et le polypropylène.

6. Procédé selon l'une des revendications précédentes, **caractérisé en ce que** le régulateur d'humidité est choisi dans le groupe des sels de métaux alcalins et alcalino-terreux, choisis en particulier dans le groupe consistant en le chlorure de sodium, le chlorure de potassium, le chlorure de zinc, le carbonate de sodium, le carbonate de potassium, le sulfate de potassium, le nitrate de potassium et/ou le chlorure de calcium, des sucres hygroscopiques, en particulier le fructose, le glucose et le saccharose, des alcools, en particulier un glycérol et/ou un glycol, des silicates, en particulier un gel de silice et/ou une bentonite, et des mélanges de ceux-ci.

7. Procédé selon l'une des revendications précédentes, **caractérisé en ce que** le régulateur d'humidité se présente dans le matériau d'emballage sous forme pulvérulente ou liquide.

8. Procédé selon l'une des revendications précédentes, **caractérisé en ce que** le matériau d'emballage contient de 0,1 à 70 % en poids, en particulier de 5 à 20 % en poids du ou des régulateurs d'humidité.

9. Procédé selon l'une des revendications précédentes, **caractérisé en ce que** les cavités présentent un diamètre moyen de 0,1 µm à 50 µm.

10. Procédé selon l'une des revendications précédentes, le matériau d'emballage se présentant sous forme d'une feuille.

11. Procédé selon l'une des revendications précédentes, **caractérisé en ce que** le matériau d'emballage est noyé entre une feuille barrière et une feuille de scellement.

12. Procédé selon l'une des revendications précédentes, **caractérisé en ce qu'**un étirage est mis en oeuvre en combinaison avec l'expansion.
